# EUROPEAN PATENT APPLICATION

(11) **EP 2 336 966 A1**
(43) Date of publication of application: **22.06.2011**
(21) Application number: 10192292.0
(22) Date of filing: 23.11.2010
(51) Int. Cl.: G06Q 30/00

(54) **Device, software application, system and method for proof of display**

(30) Priority: 24.11.2009 US 272958 P
(71) Applicant: Minicom Digital Signage, 93542 Jerusalem (IS)
(72) Inventor: Mordehay, Hilu, Mevasseret Zion (IL)
(74) Representative: Collin, Jérôme

(57) **Abstract**

Disclosed are methods, circuits, devices and systems for verifying whether content transmitted to a remote display was properly displayed. According to embodiments of the present invention, there is provided a system including a watermarking module adapted to embed a watermark into content to be displayed at a remote display, a transmitter adapted to transmit the content with embedded watermark to the remote display, and a display verification module adapted to receive a feedback signal from a watermark monitoring device in proximity with the remote display.

## Description

### CROSS REFERENCE

The present application claims the benefit of US Provisional Application 61/272,958 filed November 24, 2009, the disclosure of which is incorporated herein by reference.--

### FIELD OF THE INVENTION

The present invention relates generally to the field of digital advertising. More specifically, the present invention relates to a device system and method for obtaining proof of video or image display and/or audio playback on digital signs screens and/or on other electronic devices.

### BACKGROUND

In the field of advertising, it is a well known practice to advertise on digital signs such as plasma or LCD screens in public places such as airports, train stations, malls etc. Signs are usually managed and maintained by an operator who sells "airtime" to the advertisers. Various reasons may cause an advertising message not to be displayed or its quality to be degraded. Such reasons may include a player, connection or screen failure, or simply the screen being turned off.

The network operator needs proof that the advertisement is actually being displayed so that he can charge his customer (the advertiser). The advertiser needs proof that his advertisement was actually displayed in order for him to accordingly pay the operator for the airtime.

Existing alternatives / methods for proof of display include:

Player application - the player application can send an alert in case the application doesn't run, such an alert covers cases in which the application can be detected as problematic. It cannot, however, detect cases such as a cable or connector malfunction.

Distribution system ― Certain distribution systems may be able to detect cases of no signal or signal degradation and send appropriate alert. Unlike the abovementioned player, the distribution system can also detect cases in which there is no signal from the player but it cannot detect cases of a malfunctioning cable / connector between the distribution system and the display.

Monitor information - Certain monitors can give indication of whether they are working or not. Not-working (i.e. in OFF position) monitors will obviously display no content, however, knowledge of a properly working monitor does not guarantee that it is displaying the correct content.

Camera - camera that is located in front of the display can take pictures/video of the screen, such pictures/video can be compared to the content originally sent to that screen.

The last method (based on the camera) actually gives real proof of display, however, this solution is expensive, not esthetic (camera is located in front of display) and complicated to implement.

The other methods, or any combination of them, will not cover various types of screen failures such as: failure at the cable that connects the screen to the player or to the distribution system; failure at the connector of the player (in case of no distribution system that can detect it); failure at the player application level - the player delivers a content but not according to the play list; user mistake - there are some actions that a user may do by mistake, the system may seem to work properly but wrong content will be displayed (e.g. user changes the TV channel and it shows other content); and screen and / or player are not recovered correctly after a power break (e.g. after short power break the screen may use other input video channel or wake up with factory defaults rather than user defaults).

### SUMMARY OF THE INVENTION

The present invention is a device, software application, system and method for proof of display of specific content on a single or multiple screens which may be connected to players playing the content either through a distribution system, or, each player may be directly connected to a single screen.

In the field of digital advertising as well as in other fields, content may be transmitted from a central location (headquarters) to one or more remote locations, where it may be displayed on a single or multiple screens in each remote location. The content may be sent as files over the internet from a central location or headquarters to a player or multiple players located at the remote locations, or the content may be sent in streaming video from the headquarters to a single or multiple remote locations. According to some embodiments of the present invention, the players may verify that the content played is actually being displayed on the screen(s) and may notify the headquarters of any problem.

In order to continually verify that content that was transmitted from the headquarters is actually being displayed on each screen, according to some embodiments of the present invention, unique information (e.g. watermark) may be added to the content. According to some embodiments of the present invention, the unique information may be outputted (e.g. displayed, sounded) on the remote screens along with the advertisements, and detected by a monitoring device at the remote location.

According to some embodiments of the present invention, the unique information (watermark) may be an audio signal. According to some other embodiments of the present invention, the unique information (watermark) may be a video stream.

According to some embodiments of the present invention, one or more monitoring devices may be located in proximity of some or all of the remote screens and may be adapted to detect the watermark, within the content outputted by its respective one or more screens.

According to some embodiments of the present invention, the monitoring device may be connected to the audio output of the remote screen and may be adapted for detecting audible watermarks. According to further embodiments of the present invention, a sensor may be attached to the front of the display for detecting visual watermarks. According to some embodiments of the present invention, the sensor may be connected to the monitoring device.

According to some embodiments of the present invention, the monitoring device may transmit data (of proof of display) to the player or to the headquarters and/or to another one or more element(s) in the digital advertising network.

According to some embodiments of the present invention, the data (watermark) may be transmitted to the screen either directly or through a distribution system that may connect the player to the screen/s. According to some embodiments of the present invention, the player may send the data and/or event of wrong display to another location. According to some embodiments of the present invention the other location may be the headquarters.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Figure 1 is an example of an advertising screen layout, in accordance with some embodiments of the present invention;

Figure 2 shows a schematic diagram of an exemplary electronic advertising network, in accordance with some embodiments of the present invention;

Figure 3 shows an exemplary embodiment for monitoring the display of an electronic advertising network, in accordance with some embodiments of the present invention;

Figure 4 shows another exemplary embodiment for monitoring the display of an electronic advertising network, in accordance with some embodiments of the present invention; and

Figure 5 shows the closed loop configuration of an exemplary proof-of-display system, in accordance with some embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

In the field of digital advertising, as well as in other fields where content may be transmitted from a distant central location (headquarters) to several remote locations to players that may play the content and deliver it to a single or multiple screens in each location, there may be a need for verifying that the transmitted content is actually being displayed and/or measuring the time that each clip was displayed. In advertising it is important since the advertiser is paying the operator who owns and operates the screens for the time the advertisement is displayed on the screen and therefore needs proof that the clip was actually displayed. Since the operator may have no staff at the remote location, he may need to get an indication in case content is not being displayed, and perform the corrective actions for displaying the content. In other applications, such as stock values displayed in banks it is important to know that the displays are continually functioning and displaying the right content.

According to some embodiments, there is provided a method of verifying proper display of content at a remote display comprising by embedding a watermark into the content to be displayed. The method may include causing the content with embedded watermark to be transmitted to the remote display and monitoring an output of the remote display for the watermark. The method may further comprise transmitting a signal corresponding to detection of the watermark and/or transmitting a signal corresponding to non-detection of the watermark.

Monitoring may include monitoring a specific portion of the display. The watermark may be an image based watermark or in the form of a modulated light across a set of video frames.

Monitoring may include monitoring an audio output of the display, wherein the watermark may be in the form of one or more audio symbols and each symbol may be composed of two or more audio frequency components added to an audio of the content.

The method may include, in proximity with the display, detecting a watermark and comparing the detected watermark with an expected watermark. A signal indicating the expected watermark may be transmitted to the remote display along with the content.

Embodiments may include a system for verifying proper display of advertising content at a remote display, wherein the system may include a watermarking module adapted to embed a watermark into the content to be displayed, a transmitter adapted to transmit the content with the embedded watermark to the remote display, and a proof-of-display application adapted to receive a feedback signal from a watermark monitoring device in proximity with the remote display.

The proof-of-display application may be adapted to receive a signal indicating detection of the watermark. The proof-of-display application may be adapted to receive a signal indicating non-detection of the watermark.

The monitoring device may be an optical monitoring device adapted to monitor a specific portion of the display, wherein the watermark may be an image based watermark or in the form of modulated light across a set of video frames.

The monitoring device may be an audio monitoring device adapted to monitor an audio output of the display, wherein the watermark may be in the form of one or more audio symbols and each symbol may be composed of two or more audio frequency components added to an audio of the content.

The monitoring device may be adapted to detecting a watermark and comparing the detected watermark with an expected watermark, wherein watermarking module may be adapted to send a signal to the monitoring device indicating the expected (embedded) watermark.

According to some embodiments, there may be provided a video based advertising network including one or more remote display units functionally associated with a Content Management System (CMS). At least one of the display units may be functionally associated with a watermark monitoring module adapted to monitor for watermarks in content displayed on said at least one display unit. Proof of display logic may be functionally associated with the CMS and may be adapted to: (1) associate a given watermark with given content to be displayed on the remote display, and (2) determine whether the given watermark was detected by said monitoring device. A player functionally associated with at least one of the displays may be adapted to receive content playing information from the CMS and to play the instructed content on at least one display. The content playing information may include the content and associated watermark. The associated watermark may either be an audio or a video watermark. The CMS may communicate with the player through a content distribution system.

The monitoring module may either be a device or a software module running on the player. The monitoring module may be a device electrically connected to an audio jack of said display. The monitoring module may be a device electrically connected to an optical sensor sensing the front of the display. The monitoring module may be adapted to communicate to said proof of display logic weather: (1) a given watermark was detected, or (2) a given watermark was not detected. The monitoring module may be adapted to receive an indication of an expected watermark associated with a given content and to monitor for the expected watermark. The monitoring module may be adapted to notify the proof of display logic if an expected watermark is not detected.

The proof of display logic may be integral with the player. The proof of display logic may be integral with said CMS or any other maintenance application connected to the network.

The proof of display logic may be adapted to log a number of times a given watermark was detected by the monitoring module. The proof of display logic or the monitoring module may further be adapted to determine a cause of fault when a watermark is not detected. For example, values associated with brightness and/or contrast of a display may be detected by the monitoring module, and the brightness and/or contrast of a display may be automatically adjusted in response to the detected brightness and/or contrast values.

The player functionally associated with at least one of the displays may include the watermarking module and/or may add the watermark to the content to be displayed.

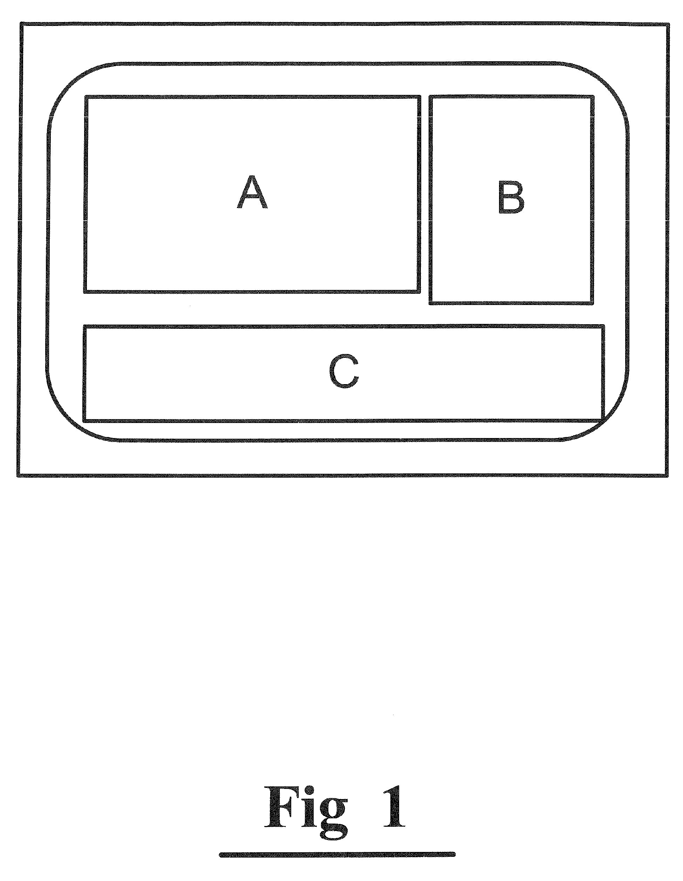

Figure 1 describes an example of a layout of an advertising display. In this example, the screen may be divided into 3 windows A, B and C. Each of the windows may play a different set of clips of different advertisers. The three sets of clips collectively create the picture displayed on the screen (layout). Verifying that the collective picture is projected on the screen may ensure that the three clips are indeed displayed, and proof-of-display may be achieved.

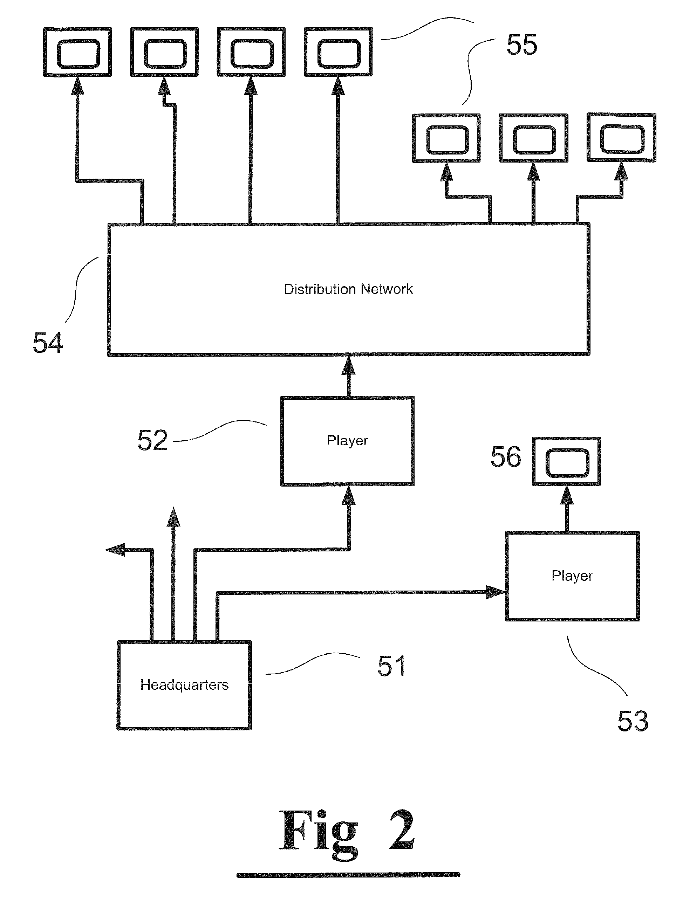

Figure 2 is an exemplary schematic description of a displaying network. In the central location (headquarters) there may be a computer that may send the content to the players (52 and 53) at each remote location such as malls, airports, banks or supermarkets. Additional information (e.g. play list) may be transmitted to the players, such information may include screen outline (Figure 1), location of each clip within the screen outline, start time, duration and frequency of clips as well as other information relevant for displaying the correct picture. The players (52 and 53) may receive the above mentioned information as well as the clips to be displayed, and may generate a video stream to be displayed. The video stream may be displayed on a screen or it may be delivered to a distribution network (54) - consisting of several elements, which may distribute the video stream to be displayed, to multiple screens (55). The player (53) can also deliver the video stream directly to the screen (56).

Since there may be many screens, and since the content may be transmitted through several networks and there may be no staff of the network operator near the screens to verify their operation, there may be a need to automatically verify that each of the displays is actually displaying the right picture. Various reasons may cause the clip not to be displayed, some exemplary reasons may be: 1) The display may be in its OFF position; 2) The channel on the screen may be switched to a different one; 3) The screen may have been restarted (e.g. due to power failure) and may display the content from the default (wrong) video input; 4) The video player may not be functioning; 5) The video cable may be disconnected from the screen; 6) 'Noisy' environment may cause a bad or blinking picture to be displayed; and/or 7) The distribution system may not be functioning.

According to some embodiments of the present invention, the player may be connected to the display (either directly or through a distribution network) in one of two ways: 1) "Combined interface" where the Audio and Video signals share the same leads for example, HDMI (High-Definition Multimedia Interface) or an advanced version of 'DisplayPort' cable. 2) "Separated interface" where the Video and Audio signals are separated (e.g. VGA, composite, DVI) cable.

According to some embodiments of the present invention, in a "Combined interface" configuration, such as a HDMI connection, the video and audio signals are transmitted over the same leads, therefore it may be possible to determine that the video picture is actually displayed if the audio signal of the displayed clip is present. If the display is off, or displays the wrong channel, or does not receive a signal, the right picture will not be displayed and wrong audio will sound. Moreover, in cases where the video quality is bad (due to noise), the audio quality is likely to be bad as well. Hence, video quality may be substantially determined based on the audio quality.

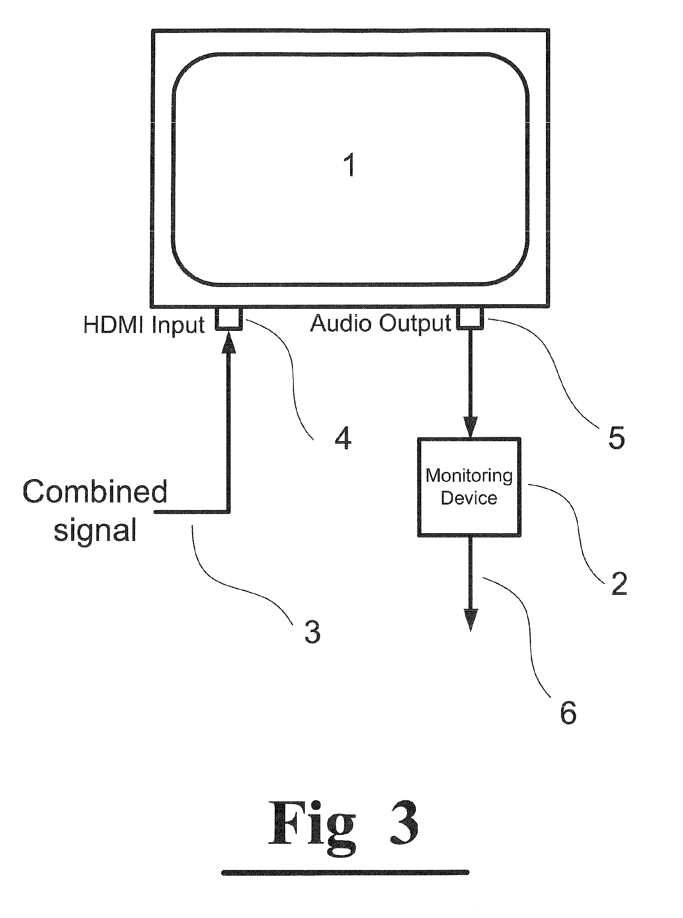

Figure 3 is a schematic diagram of some exemplary embodiments of the present invention. According to these embodiments, the display (1) may receive a combined video and audio signal (3) through its "Combined interface" - an HDMI input (4) in this example - from an audio/video source. According to some embodiments of the present invention, there may be provided a monitoring device (2) located near the display. According to some embodiments of the present invention, the monitoring device (2) may be connected to the audio output (5) of the display. According to some other embodiments of the present invention, the monitoring device may be integrated with the player in the same device. According to some other embodiments of the present invention, the monitoring device may be a software driver in the player. According to some embodiments of the present invention, the audio output of the display may be connected to the audio input of the player. According to some embodiments of the present invention, the monitoring device may be a software driver in the player. According to some embodiments of the present invention, the monitoring device may be part of a unit in the distribution system. According to some embodiments of the present invention, the audio output of the display may be connected to a unit of the distribution system.

According to some embodiments of the present invention, known audio signals may be added to each clip or to each layout (watermark(s)). According to some embodiments of the present invention the audio signals (watermark(s)) may encode relevant information such as clip number, date and time etc. by, for example, DTMF (Dual-Tone Multi-Frequency) coding. According to some embodiments of the present invention, the watermark may be added to the content. According to some embodiments of the present invention, the watermark may be generated by the player and appended to the content sent to the display.

According to some embodiments of the present invention, the monitoring device (2) may receive the audio signals, analyze or decode them, and transmit the information back to the player. According to some embodiments of the present invention, the monitoring device may send an indication regarding the presence / quality of the audio signal to the player. According to some embodiments of the present invention, the monitoring device may send the decoded information of the audio signal to the player. According to some embodiments of the present invention, the player may determine whether the content was displayed or not, and may also determine its video/audio quality.

According to some embodiments of the present invention, the player may send to the monitoring device information regarding the expected audio signal to be played. According to some embodiments of the present invention, the player may send to the monitoring device information regarding the watermarks of the expected audio signal to be played. According to some embodiments of the present invention, the monitoring device may compare the received audio signal from the one or more screens connected to it, to the expected audio it received from the player, and determine whether each screen is displaying the correct picture. According to some embodiments of the present invention, the monitoring device may compare the watermarks of the received audio signal from the one or more screens connected to it, to the watermarks it received from the player, and determine whether each screen is displaying the correct picture.

According to some embodiments of the present invention, the player may send to some device in the advertising network information regarding, or a watermark of, the expected audio signal to be played. According to some embodiments of the present invention, the monitoring device may send information regarding, or a watermark of, the audio signal that was played by the one or more screens connected to it, to the device on the advertising network. According to some embodiments of the present invention, the device on the advertising network may compare the received audio signal sent to it from the monitoring device, to the expected audio it received from the player, and determine whether each screen is displaying the correct picture. According to some embodiments of the present invention, the device on the advertising network may compare the audio information or the watermarks sent to it from the monitoring device, to the audio information or the watermarks it received from the player, and determine whether each screen is displaying the correct picture.

According to these embodiments, the loop for each screen may be closed, and the player, or the monitoring device, or another device on the advertising network may determine that each screen is displaying the correct picture. The player, or the monitoring device, or another device on the advertising network can send the proof of display information to another location / system, for example, the main application at the headquarters, or to any other device on the network such as maintenance / management applications.

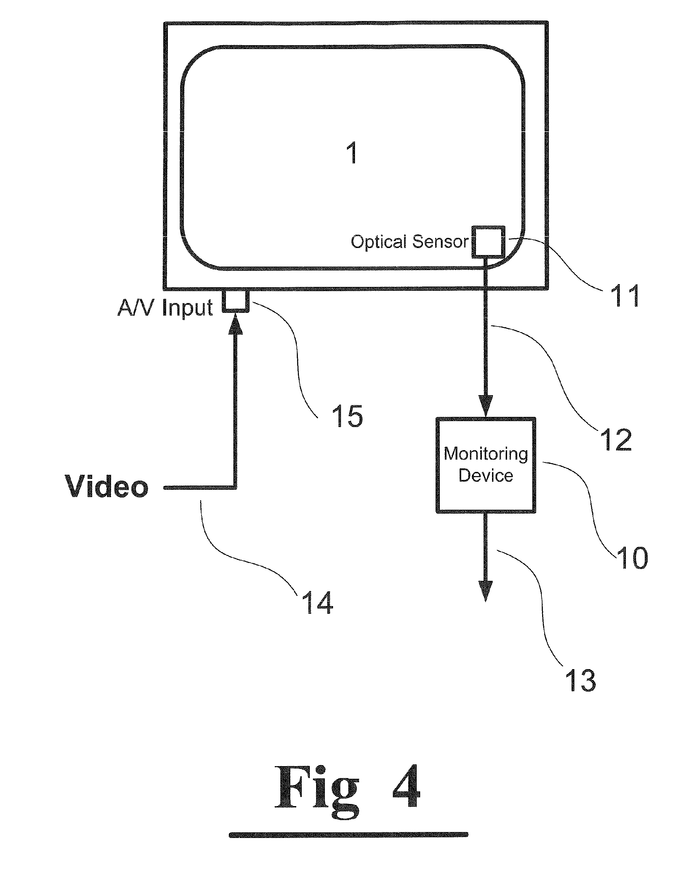

Figure 4 is a schematic diagram of some other exemplary embodiments of the present invention. According to these embodiments, the display (1) may receive a video signal (14) through its video input (15) from a video source.

According to some embodiments of the present invention, there may be a monitoring device (10) located near the display. According to some embodiments of the present invention, the monitoring device may be integrated with the player in the same device. According to some embodiments of the present invention, the monitoring device may be part of the distribution system. According to some embodiments of the present invention, there may be an optical sensor(s) (11) attached to the front side of the screen (e.g. in one of the corners).

According to some embodiments of the present invention, the sensor(s) (11) may be connected to the monitoring device (10). According to some embodiments of the present invention, the sensor may be connected to the player. According to some embodiments of the present invention, the monitoring device may be a software driver in the player. According to some embodiments of the present invention, the monitoring device may be part of the distribution unit.

According to some embodiments of the present invention, known video signals (watermark(s)) may be added to each clip or layout, for example, alternating red/green/blue pixels in the screen's corner. According to some embodiments of the present invention the added video signals (watermark(s)) may encode relevant information such as clip number, date and time etc. According to some embodiments of the present invention, the watermark may be added to the content. According to some embodiments of the present invention, the watermark may be generated by the player and appended to the content sent to the display. According to some embodiments of the present invention, the sensor (11) may detect the added video signals and transmit the detected information or just an indication regarding the presence of the known video signal to the monitoring device (10).

According to some embodiments of the present invention, the monitoring device (10) may receive the signals from the sensor, analyze or decode them, and transmit the information back to the player. According to some embodiments of the present invention, the monitoring device may send the received video watermarks to the player. According to some embodiments of the present invention, the player may compare the received watermarks with the transmitted watermark to determine whether the content was displayed on each display or not. According to some embodiments of the present invention, the player may send to the monitoring device information regarding the expected video watermark to be displayed. According to some embodiments of the present invention, the monitoring device may compare the received video watermark from the one or more screens connected to it, to the expected video watermark it received from the player, and determine whether each screen is displaying the correct picture.

According to some embodiments of the present invention, the player may send to some device in the advertising network information regarding the expected video watermark to be displayed. According to some embodiments of the present invention, the monitoring device may send information regarding the video watermark that was displayed by the one or more screens connected to it, to the device on the advertising network. According to some embodiments of the present invention, the device on the advertising network may compare the received video watermarks sent to it from the monitoring device, to the expected video watermarks it received from the player, and determine whether each screen is displaying the correct picture.

According to these embodiments, the loop for each screen may be closed, and the player, or the monitoring device, or another device on the advertising network may determine either by the analyzed information or by the presence of the known video watermark that each screen is displaying the correct content. The player, or the monitoring device, or another device on the advertising network can send the proof of display information to another location / system, for example, the main application at the headquarters, or to any other device on the network such as maintenance / management applications.

According to other embodiments of the present invention, the loop may not be closed and information regarding the number and duration that each clip was displayed may be collected from the watermarks. According to these embodiments, the watermarks may encode relevant information such as clip number, date and time etc. According to some embodiments of the present invention, the monitoring device may send the watermarks or information associated with the watermarks to the player or to another device on the advertising network. According to some embodiments of the present invention, the player or the other device on the advertising network may log the times each clip was displayed and on which screen, for billing purposes.

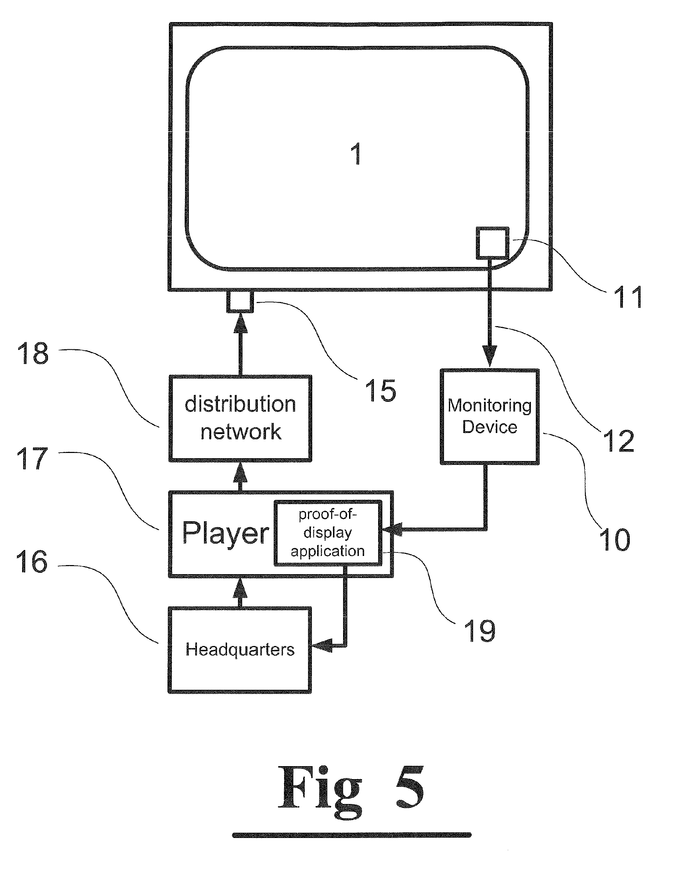

Figure 5 describes the closed loop of an exemplary system, in accordance with some embodiments of the present invention. A CMS (Content Management System) application, running at the headquarters (16) or networked to it, may receive advertisement clips, optionally, along with information such as: at what hours during the day the clip should be displayed, duration of the clip, number of times to be displayed in each hour, clip window size and location on the screen layout, whether the clip includes audio or not, etc.

The CMS may then create a playlist file, which may include information regarding the screen layout, the sequence in which the clips should be played, and their location on the screen layout. Unique information (watermark(s)), which may be detected by the monitoring device, may be added to the content and included in the playlist that may be sent from the headquarters to the players. Alternatively, the watermark may be generated by the player and appended to the played content sent to the display.

According to some embodiments of the present invention, this unique information (watermark(s)) may be in the form of audio signals. According to some embodiments of the present invention, the audio signals may be at frequencies and/or level that may not be heard by a human ear.

According to some other embodiments of the present invention, the unique information (watermark(s)) may be in the form of a visual code to be displayed, for instance, on the screen's corner. The playlist file along with the clips may be transmitted to some or all players (17) at the different distant locations. The players may receive the clips and the playlist file and may create a video stream to be transmitted to and projected on the screen; this video stream may combine all the clips of all advertisers according to the parameters of each clip as defined in the playlist file, along with the unique information (watermark(s)). The player may also create one or more additional audio streams along with the unique information (watermark(s)). The audio/video stream may then be transmitted to a screen, or over a distribution network (18) to one or more screens (1) at that location.

According to embodiments of the present invention, there may be a monitoring device (2) as described in figure 3, or (10) as described in figure 4 which may continually monitor and extract information from the picture/sound, which is being displayed/played on the screen and may further send the extracted information back to the player. The extracted information can be either a proof of display per layout, or an indication of the presence of the one or more known Video/Audio signals (watermark(s)). The proof-of-display application (19) that may be within the player (as shown), may use this indication, along with the knowledge of the layouts that were planned to be played, in order to determine the proof of display per layout. The player may send the proof of display log back to the headquarters.

According to some embodiments of the present invention, the proof-of-display application may further determine the point of failure, for instance, if the proof-of-display application determines that all screens but one, in a certain location, function properly, the cause of failure may be the screen or the cable leading to that screen. But if all screens in a site do not function then the cause of failure may be that the player is not functioning.

According to some embodiments of the present invention, upon a problem detection and identification of the cause of the problem by the proof-of-display application (19), automatic corrective actions may be triggered, for example, in the case of a player problem, a "player restart" action may be executed for recovery.

According to some embodiments of the present invention, the screen parameters, such as the levels of brightness and contrast may be adjusted automatically so that several screens may have substantially similar setting parameters. According to these embodiments, there may be a calibration application, which calibration application may create a calibration image that may reside in the player. The calibration image may be, for example, a red-green-blue alternating dot. The calibration image may be displayed on one screen for tuning purposes.

According to some embodiments of the present invention, there may be a sensor/s attached to the front of the screen, which may detect the calibration image and may accordingly determine the calibration parameters. According to some embodiments of the present invention, the one screen may be tuned manually to display an optimal picture. Once the display is tuned, the reading of the sensor may be sent to the calibration application and saved. According to some embodiments of the present invention, all screens may automatically be tuned to the same readings as those that were saved by the calibration application in order to achieve the same optimal picture.

While certain features of the invention have been illustrated and described herein, many modifications, substitutions, changes, and equivalents will now occur to those skilled in the art. It is, therefore, to be understood that the appended claims are intended to cover all such modifications and changes as fall within the true spirit of the invention.

## Claims

1. A method of verifying proper display of content at a remote display comprising:
embedding a watermark into the content to be displayed;
causing the content with embedded watermark to be transmitted to the remote display; and
monitoring an output of the remote display for the watermark.

2. The method according to claim 1 further comprising transmitting a signal corresponding to detection of the watermark.

3. The method according to claim 1, wherein monitoring includes monitoring a specific portion of the display.

4. The method according to claim 3, wherein the watermark is an image based watermark.

5. The method according to claim 3, wherein the watermark is in the form of modulated light across a set of video frames.

6. The method according to claim 1, wherein monitoring includes monitoring an audio output of the display.

7. The method according to claim 6, wherein said watermark is in the form of one or more audio symbols and each symbol is composed of two or more audio frequency components added to an audio of the content.

8. A system for verifying proper display of advertising content at a remote display:
a watermarking module adapted to embed a watermark into the content to be displayed;
a transmitter adapted to transmit the content with the embedded watermark to the remote display; and
a proof-of-display application adapted to receive a feedback signal from a watermark monitoring device in proximity of the remote display.

9. The system according to claim 8, wherein said proof-of-display application is adapted to receive a signal indicating detection of the watermark.

10. The system according to claim 9, wherein said monitoring device is an optical monitoring device adapted to monitor a specific portion of the display.

11. The system according to claim 10, wherein the watermark is an image based watermark.

12. The system according to claim 10, wherein the watermark is in the form of modulated light across a set of video frames.

13. The system according to claim 8, wherein said monitoring device is an audio monitoring device adapted to monitor an audio output of the display.

14. The system according to claim 13, wherein said watermark is in the form of one or more audio symbols and each symbol is composed of two or more audio frequency components added to an audio of the content.

15. The system according to claim 8, wherein said monitoring device is adapted to detecting a watermark and comparing the detected watermark with an expected watermark.
